# EUROPEAN PATENT APPLICATION

(11) **EP 3 823 104 A1**
(43) Date of publication of application: **19.05.2021**
(21) Application number: 19208721.1
(22) Date of filing: 12.11.2019
(51) Int. Cl.: H01R 13/622, H01R 13/52, H01R 13/627

(54) **DISTRIBUTION AUTOMATION DEVICE**

(71) Applicant: TE Connectivity Nederland B.V., 5222 AR 's-Hertogenbosch (NL); TE Connectivity Germany GmbH, 64625 Bensheim (DE)
(72) Inventor: De Bruijn, Jeroen Jozef Maria, 5175 SC Loon op Zand (NL); Feldmeier, Günter, 64653 Lorsch (DE)
(74) Representative: Grünecker Patent- und Rechtsanwälte PartG mbB

(57) **Abstract**

The invention relates to a distribution automation device (1) comprising a housing (4) with at least one socket (6) for receiving at least one plug connector (34) penetrating a front face (8) of the housing (4). The socket (6) comprises at least one locking feature (10), whereby a first locking feature (12) is adapted to engage a complementary formed locking feature (37) of the plug connector (34). In order to further facilitate the manufacturing process of the distribution automation device (1), the at least two locking features (10) are formed integrally with one another and the housing (4) as a monolithic unit (16).

## Description

The invention relates to a distribution automation device for receiving a plug connector.

A distribution automation device, such as a sensor-actuator box or junction box, is often used in decentralized connection technology as a connection between the periphery and the control unit. The distribution automation device may be an industrial internet of things (IIOT) gateway for transferring data over a network without requiring human-to-human or human-to-computer interaction. The distribution automation device may collect sensor signals and/or distribute actuator signals. The sensors and/or actuators can be connected to the distribution automation device with plug connectors. The plug connector is inserted into a socket of the housing of the distribution automation device and can be mated with and locked to a socket insert mounted to the housing. However, any force acted upon the plug connector is directly transmitted to the socket insert, possibly damaging the electrical connection between the plug connector and the socket insert.

It is an object of the invention to provide a distribution automation device which can be manufactured cost efficiently.

The invention solves the above-mentioned problem by providing a distribution automation device for receiving a plug connector, the distribution automation device comprising a housing with a socket for at least partially receiving the plug connector, wherein the socket comprises at least one locking feature for engaging a complementary locking feature of the plug connector, wherein the at least one locking feature and the housing are formed integrally with one another as a monolithic unit.

According to the inventive solution, the at least one locking feature is formed integrally with the housing as a monolithic unit. Therefore, the plug connector can be directly locked to the housing, so that forces exerted onto the plug connector, such as pulling forces or the like, can be directly transmitted to the housing rather than the socket insert, reducing the strain in the electrically coupled components during the application. Furthermore, the amount of separate parts in the distribution automation device can be reduced further facilitating the manufacturing and assembly of the distribution automation device.

The invention can be further improved by the following features, which are independent from one another with respect to their respective technical effects and which can be combined arbitrarily.

For example, the housing may at least partially enclose a volume adapted to receive a contact element to be electrically contacted by the plug connector, such as a printed circuit board. The socket may penetrate a front face of the housing, allowing the insertion of the plug connector into the volume from outside the volume.

The plug connector may particularly be a push-pull connector, having at least one elastically deflectable latch. In this case, the at least one locking feature may be formed as a limit stop which is adapted to be engaged by the latch in a positive fit. Hence, the at least one locking feature prevents accidental disconnection, and is adapted to form a simple but fast and strong locking mechanism together with the complementary locking feature of the plug connector. Preferably, the plug connector may be an inner push-pull connector having a latching protrusion extending radially outwardly from the plug connector. Therefore, the at least one locking feature may act as a radial limit of the socket.

The at least one locking feature may be arranged coaxially with the socket, allowing a simultaneous insertion of the plug connector and locking of the plug connector in the socket.

A protrusion may extend from a front face of the housing, wherein the at least one locking feature may be arranged at least partially on the protrusion. The protrusion may be essentially circumferential and arranged coaxially to the socket, thereby forming an inner wall of the socket.

In order to keep the distribution automation device compact, the protrusion may preferably extend from the front face towards the volume. Therefore, the at least one locking feature may be arranged inside the volume, reducing the overall dimensions of the distribution automation device. The insertion depth of the plug connector into the housing may be increased. Therefore, the distribution automation device is also suitable for applications having restricted space.

To further decrease the size of the distribution automation device, the at least one socket may comprise an entry opening being essentially flush with a top surface of the front face facing away from the volume. Consequently, no protuberance is formed on the top surface framing the entry opening of the at least one socket.

The housing may comprise multiple sockets arranged in at least one row. As the at least one locking feature is formed integrally with the housing, no further parts have to be mounted in order to secure the plug connector in the distribution automation device, reducing the overall size of each socket. Therefore, the packing density may be increased, or the housing may be adapted for plug connectors having a larger diameter while maintaining the same outer contour compared to housings for plug connectors having a smaller diameter.

According to a further advantageous embodiment of the invention, the distribution automation device may comprise a socket insert for electrically mating with the plug connector, the socket insert being arranged coaxially within the socket, wherein a gap is formed between the socket insert and the housing, the at least one locking feature being accessible through the gap.

The gap may be opened at a side of the socket, the gap forming a channel leading to the at least one locking feature. The socket insert may act as an interface adapted to receive the contact pins of the plug connector and electrically coupling it to a further contact element arranged within the volume of the housing, such as the printed circuit board. For this, the socket insert may comprise at least one through hole, wherein the contact pin of the plug connector may be inserted from one end, and a contact pin for connecting to the contact element may be inserted from the other end. The contact pins may thus be electrically connected to one another, eventually electrically coupling the plug contact to the contact element.

Therefore, the plug connector may be electrically connected to the contact element via the contact pin. The contact pin may, for example, be a soldering pin or a press-fit pin. Since, according to the invention the plug connector is directly locked to the socket insert, the connection between the socket insert and the contact element will not be affected due to stress exerted onto the plug connector, such as pulling forces.

The socket insert and the contact element may be preassembled prior to mounting the socket insert in the housing, providing space for the assembly of the socket insert and the contact element. Alternatively, the socket insert may first be attached to the housing before mounting the contact element, particularly the printed circuit board. The at least one contact pin may either be attached to the socket insert before mounting the contact element, or be positioned and secured to the contact element and subsequently pushed into the through hole of the socket insert.

Since the forces acting upon the plug connector are directly transferred to the housing rather than to the socket insert, the socket insert is not affected by said forces. Therefore, no additional locking features are necessary to lock the socket insert to the housing. Consequently, the socket insert may be a simple molding construction without undercuts or the like. Therefore, the size of the socket insert may be reduced, particularly the size in the radial direction. Hence, the distance of the socket from a side surface of the housing may be reduced, allowing a larger distance between adjacent sockets, increasing the pitch between the respective socket inserts.

The socket insert may be attached to the housing by means of friction. No further tooling is required to facilitate the installation of the socket insert to the housing. The socket insert may comprise a tub body adapted to fittingly receive the at least one locking feature and/or the protrusion. Alternatively, the socket insert may comprise at least one radially protruding collar adapted to be fittingly received in the socket. Therefore, the socket insert does not radially protrude from the socket, allowing the distance of the socket and the side surface of the housing to be minimized.

The socket insert may be pressed between the front face of the housing and the contact element. The housing may comprise fixing means for securing the contact element to the housing, for example, by means of screws. Therefore, the securing of the contact element within the housing may prevent the socket insert from accidentally being pushed further into the volume.

The socket insert may comprise at least one sealing ring for sealing the connection between the socket insert and at least one of the housing and the plug connector. For simple manufacturing of the socket insert, the socket insert may be a multi-component molded part, i.e. molding of two or more components in at least two molding steps. An electrically insulating body may be formed in the first molding step, and subsequently the at least one sealing ring may be molded to the insulating body. Therefore, the at least one sealing ring may be integrated into the molding design, eliminating an assembly process.

A second sealing ring may be provided, the first sealing ring being adapted to seal the connection between the housing and the at least one socket insert, and the second sealing ring being adapted to seal the connection between at least one type of a plug connector and the at least one socket insert. Alternatively, a larger single sealing ring may be provided for sealing the connection between the at least one socket insert and the housing and between the at least one socket insert and at least one type of plug connector.

The socket insert may preferably be mounted in the socket, wherein the socket insert does not protrude from the housing at a side of the socket facing the outside. Therefore, the overall height of the connector arrangement may be reduced, optimizing it for use within a limited space. Furthermore, the risk of damaging the socket insert can be reduced.

A plurality of socket inserts and a plurality of sockets may be provided. The plurality of socket inserts may be combined in a unitary part. The unitary part may hold each socket insert at a predetermined relative position to one another to match an arrangement of sockets formed in the housing. Therefore, multiple socket inserts can be mounted in the housing simultaneously, allowing an easy pre-alignment of the socket insert in the distribution automation device and a reduction of assembly time. The multiple sockets may be formed integrally with the unitary part as a monolithic part, e.g. via injection molding. Hence, the pitch between the socket inserts may be fixed during the production process of the monolithic component.

The unitary part may comprise sections of reduced material thickness in comparison to its immediate surroundings for forming a predetermined breaking area for easily separating one socket insert from the unitary part.

The housing may be formed as an injection molded piece and may comprise a plastic material, allowing for cost efficient production of the housing in mass scale. However, to further improve the rigidity of the distribution automation device, the housing may be a die cast part. The housing may, for example, comprise aluminum or an aluminum alloy, which may withstand stronger forces compared to a plastic housing. Particularly, the thread being tapped into the die cast part may increase the retention forces of the at least one locking feature, reducing the risk of unintentionally pulling the plug connector out of the housing and damaging the housing and/or the plug connector.

At least one positioning rib may be formed on the housing protruding from a bottom surface of the housing facing away from the outside. The at least one positioning rib may be adapted to position the socket insert coaxially to the socket at a predetermined relative rotational position.

According to a further aspect of the invention, the at least one socket of the distribution automation device may be adapted to receive a first and a second type of plug connector, the second type of plug connector being different from the first type of plug connector. The first and second type of plug connectors may particularly comprise different types of complementary locking features. In this case, the at least one socket may comprise at least two locking features that are formed integrally with one another and the housing as the monolithic unit. A first locking feature of the at least two locking features may be adapted to lockingly engage the first type of the plug connector and a second locking feature may be adapted to lockingly engage the second type of the plug connector. Consequently, the at least one socket of the distribution automation device is adapted to receive at least two different types of plug connectors, allowing the user to integrate the different types of plug connectors, particularly standardized plug connectors, in a single distribution automation device. Hence, there is no need to provide a different distribution automation device for each type of plug connector, as the at least two types of plug connectors may be received in the distribution automation device. The production of the at least two locking features and the housing as a monolithic unit further reduces the amount of separate parts, and thus facilitates the production. The first and second type of locking features may employ a different type of positive fit system.

The first locking feature of the at least two locking features may at least partially comprise a thread. The thread may be adapted to engage a complementary thread of the plug connector. Preferably, the thread may be an inner thread adapted to receive an outer thread of the plug connector. The thread may be normed such that depending on the market, the thread may be a metric ISO-thread or a thread according to the Unified Thread Standard (UTS). Consequently, the first type of plug connector may be a standardized metric plug connector, e.g. an M12 type plug connector.

The thread may be tapped, allowing for a productive and economical threading through high cutting speeds and long tool life. The monolithic unit can be formed in a first step and the thread may be tapped afterwards. Consequently, the monolithic unit can be formed in a mass scale having identical dies, and different threads may be tapped depending on the requirements, further optimizing the manufacturing process.

According to another advantageous embodiment, at least one of the at least two locking features may extend only over a part of the inner circumference of the socket. The other of the at least two locking features may also extend only over a part of the inner circumference of the socket. Therefore, at least one of the at least two locking features may be circumferentially limited, so that the plug connector may be inserted in a predetermined rotational position to engage the respective locking feature.

The at least one locking feature of the at least two locking features may extend over separate parts of the inner circumference being distanced from one another. For example, the first locking feature may extend over three different parts having center axes being arranged at approximately 120° to each other. Consequently, the locking force acting upon the respective plug connector may be evenly distributed along the circumference of the plug connector and the socket. The second locking feature may extend between the adjacent parts with the first locking feature. In other words, the first and the second locking feature of the at least two locking features may extend over alternating parts along the inner circumference of the socket. Hence, the different locking features may be separated from one another also functioning as a primary polarization feature.

To further facilitate the manufacturing process and equally balance the locking features along the circumference, each part may extend around approximately 60° along the circumference. Hence, in an alternating arrangement of the first and second locking features, a part with the first locking feature may be arranged diametrically to a part with the second locking feature. Of course, any other combination of number of parts and lengths of each part is imaginable within the scope of the application, such as having four alternating parts each extending around approximately 90° of the circumference.

In order to allow a plug connector having a larger outer contour than the other plug connector to be inserted into the socket, the parts with the second locking feature may be radially further distanced to a center axis of the socket than the parts of the first locking feature. The plug connector of the second type maybe, for example, an internal push-pull connector having elastically deflectable latching arms, whereby a latch may protrude radially outwards to engage a stop surface provided by the second locking feature. As the second locking feature is arranged in a radial notch along the circumference, additional space for deflecting the latching arms may be provided.

The protrusion may lead into a depression formed on the front face opening towards the side facing away from the volume, whereby the socket comprises a larger inner circumference at the depression than at the protrusion. Therefore, forming a step between the protrusion and the depression. The plug connector may comprise an abutment shoulder with a sealing ring adapted to be sealingly received in the depression.

A kit may be provided, the kit comprising a distribution automation device having a socket with at least two types of locking features and at least two types of plug connectors. A first type of the plug connector and a second type of the plug connector have different types of complementary formed locking features. The first locking feature and the complementary formed locking feature of the first type of the plug connector employ a different system of positive fit than the second locking feature and the complementary formed locking feature of the second type of the plug connector.

The first type of the plug connector and the first locking feature may employ a threaded locking system. The second type of a plug connector and the second locking feature may employ a latching assembly as a locking system.

In the following, the distribution automation device according to the invention is explained in greater detail with reference to the accompanying drawings, in which exemplary embodiments are shown.

In the figures, the same reference numerals are used for elements, which correspond to one another in terms of their function and/or structure.

According to the description of the various aspects and embodiments, elements shown in the drawings can be omitted if the technical effects of those elements are not needed for a particular application, and *vice versa*: i.e. elements that are not shown or described with reference to the figures but are described above can be added if the technical effect of those particular elements is advantageous in a specific application.

In the figures:
- Fig. 1: shows a schematic bottom view of a distribution automation device according to the invention;
- Fig. 2: shows a schematic cut view of a first embodiment of the inventive distribution automation device;
- Fig. 3: shows a schematic cut view of a second embodiment of the inventive distribution automation device; and
- Fig. 4: shows a schematic cut view of a third embodiment of the inventive distribution automation device.

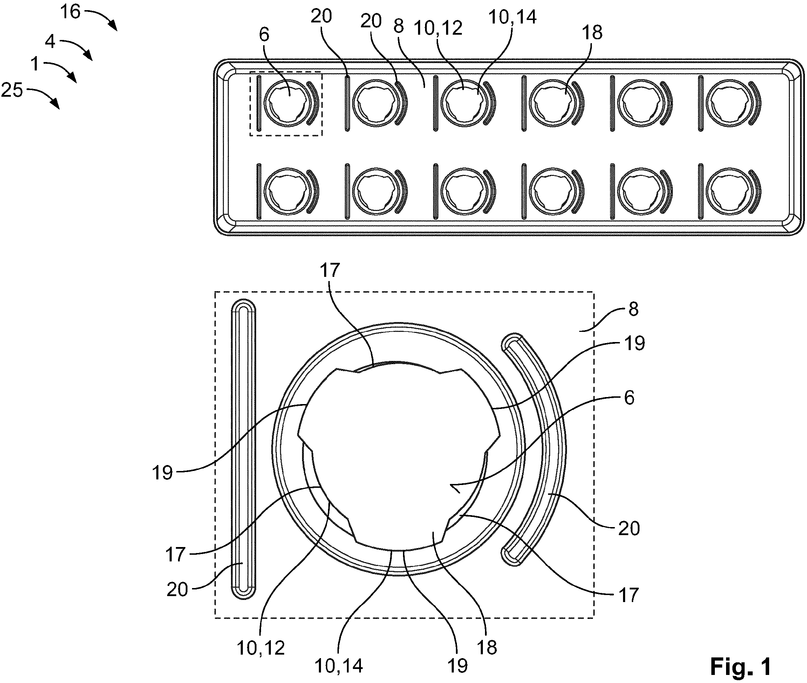

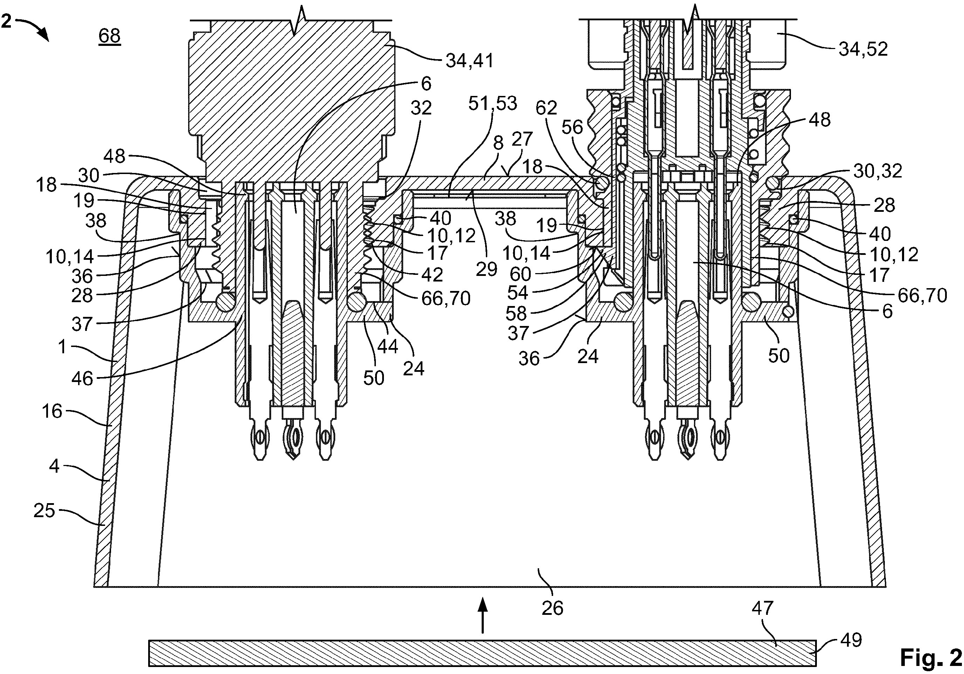

First, a first exemplary embodiment of the inventive distribution automation device 1 and the connector arrangement 2 is elucidated with reference to Figs. 1 and 2.

Fig. 1 shows a schematic bottom view of the distribution automation device 1. The distribution automation device 1 comprises a housing 4 with at least one socket 6 for receiving at least two types of plug connectors penetrating a front face 8 of the housing 4. A first type of the plug connector and a second type of the plug connector may be different from one another in at least one of size and kind, e.g. the first type of the plug connector and the second type of the plug connector may comprise different complementary locking features. The socket 6 comprises at least two locking features 10, whereby a first locking feature 12 is adapted to lockingly engage the first type of the plug connector, and the second locking feature 14 is adapted to lockingly engage the second type of the plug connector. In order to further facilitate the manufacturing process of the distribution automation device 1, the at least two locking features 10 are formed integrally with one another and the housing 4 as a monolithic unit 16.

The at least two locking features 10 may be arranged essentially coaxial to the socket 6. As can be seen in Fig. 1, the housing 4 may comprise multiple sockets 6 arranged in two rows on the front face 8. Each socket 6 may be essentially circumferential having radial notches 18 partially extending along the circumference. In other words, the socket 6 is radially bordered by the housing 4, particularly the at least two locking features 10, whereby at the notches 18 the radial distance to the border is larger than at the parts adjacent to the notches 18.

The at least two locking features 10 may extend along the radial border. Preferably, the first locking feature 12 may extend over a part 17 of the inner circumference of the socket, and the second locking feature 14 may extend over a different part 19 of the inner circumference of the socket 6. In this exemplary embodiment, the second locking feature 14 may be formed in the notches, and the first locking feature 12 may be formed in the parts between the notches 18.

Consequently, the second type of the plug connector may have a larger outer contour complementary to the notches 18. The parts 17, 19 may be arranged alternatingly along the circumference. In order to equally arrange the at least two locking features 10 around the circumference and balance the plug connector within the socket 6, the at least two locking features 10 may each extend over three respective parts 17, 19, whereby the parts with the same locking feature 10 may be arranged at approximately 120° to one another. Each part 17, 19 may extend over approximately 30° around the inner circumference of the socket 6 thus forming a rotationally symmetrical cross section of the socket 6 in a plane essentially perpendicular to an axial direction of the socket 6. Hence, the plug connector may be inserted in at least three possible rotational positions into the socket 6.

A socket insert may be mounted in the housing 4. In order to facilitate the positioning of the socket insert within the housing 4, the housing 4 may further comprise at least one positioning rib 20 protruding from a bottom surface 22 of the front face 8 of the housing 4. The at least one positioning rib 20 may be adapted to the shape of the socket insert. Preferably, two positioning ribs 20 may be provided at opposite sides radially to the socket, the two positioning ribs 20 being not symmetrical, particularly rotationally symmetrical, around a center axis of the socket 6. Consequently, the two positioning ribs 20 may act as polarizing features, allowing the socket insert to only be mounted in a predetermined rotational position.

The monolithic unit 16 may be an injection molded piece, allowing a cost efficient production of the monolithic unit 16, especially in large numbers. However, to further increase the rigidity of the monolithic unit 16, the monolithic unit 16 may be a die cast part 25 and may comprise aluminum or an aluminum alloy. This may be particularly advantageous, since the forces acting upon the inserted plug connector, such as pulling forces or vibrations, may be transferred to the housing as the plug connector is directly engaged with the housing 4, rather than to the socket insert.

Fig. 2 shows a schematic cut view of the exemplary embodiment of the connector arrangement 2. The connector arrangement 2 comprises the inventive distribution automation device 1 and at least one socket insert 24 mounted to the housing 4. For each socket 6 a socket insert 24 may be provided, the socket insert 24 being arranged coaxially to the respective socket 6.

As can be seen in Fig. 2, the housing 4 may at least partially enclose a volume 26. The socket insert 24 may be received in the volume 26 and preferably may not protrude from the socket 6 on a side 27 of the front face 8 facing away from the volume, in order to keep the height of the connector arrangement 2 relatively low, allowing an application even with tight space restrictions.

A gap 66 may be formed between the socket insert 24 and the housing 4, the gap 66 providing access to the at least two locking features 10. The gap 66 is open at a side of the socket 6 facing the outside 68 and may form a channel 70 leading to the second locking feature 14.

The at least two locking features 10 may be formed on an essentially hollow cylindrical protrusion 28 protruding from a side 29 of the front face 8 facing the volume 26 further into the volume 26. Consequently, the notches 18 may be formed on the protrusion 28.

The socket 6 radially limited by the protrusion 28 may flow into a depression 30 formed on the side 27 on the front face 8. The socket 6 may have a larger light width, particularly larger light diameter at the depression compared to the light width, particularly light diameter, of the socket at the protrusion 28. Therefore, an abutment shoulder 32 is formed which may be adapted to receive a collar of the plug connector 34 limiting the insertion depth of the plug connector 34.

The protrusion 28 may further comprise a stepped outer surface 36, whereby the outer diameter of the protrusion increases in at least one step 38 at an end closer to the front face 8. The protrusion 28 may be fittingly received in the socket insert 24, whereby the socket insert 24 may preferably comprise a sealing ring 40 adapted to be pressed into a corner of the step. Therefore sealing the connection between the housing 4 and the socket insert 24.

In order to minimize the space occupied by the distribution automation device 1, the at least two locking features 10 and/or the protrusion 28 may preferably not protrude beyond the side 27 of the front face 8 from the side 29 facing the volume 26. The side 27 may preferably be flat.

In Fig. 2, the first type of plug connector 41 is shown on the left hand side and the second type of plug connector 52 is shown on the right hand side. As can be seen, the plug connector of the first type 41 may be a metric connector, such as a M12 connector, comprising an external thread as a complementary formed locking feature 37. Therefore, the first locking feature 12 may be an internal thread 42. The internal thread 42 may extend over the parts 17 being closer to the center axis of the socket 6, as explained above with reference to Fig. 1. The thread may preferably be tapped into the parts 17. Consequently, a single die structure is necessary for producing distribution automation devices while the thread can later be added according to specific application requirements.

The first type of the plug connector 41 may be threaded into the socket 6 engaging the first locking feature 12. The plug connector of the first type 41 may be inserted until abutment of a bottom surface 44 of the socket insert 24. Preferably, the socket insert 24 may comprise a second sealing ring at the bottom surface 44 being adapted to seal the connection between the plug connector of the first type 41 and the socket insert 24.

The socket insert 24 may be a connector interface 46 having a central contact pillar 48 extending coaxially into the socket 6. The contact pillar 48 may be adapted to receive contact pins of the plug connector 34 and electrically couple it with a further contact element 47 received in the volume 26, such as a printed circuit board 49. The contact pillar may be provided with at least one through hole in which the contact pin of the plug connector can be inserted from outside the volume. On the opposite side, a contact terminal, such as a press fit pin, may be inserted into the through hole such that the terminal electrically contacts the contact pin. The press fit pin may be connected to a printed circuit board on the end protruding from the through hole. Consequently, the plug connector 34 may be connected to the printed circuit board (PCB) via the socket insert 24.

With the distribution automation device 1 and connector arrangement 2, different assembly sequences are possible. For example, the socket insert 24 may be mounted on the PCB via the press-fit pins or alternatively may be soldered onto the PCB, before inserting the subassembly into the distribution automation device 1. However, the socket insert 24 may also be assembled in the distribution automation device 1 before connecting the socket insert 24 to the PCB, as shown in Fig. 2.

A tub 50 may be formed coaxially around the contact pillar comprising the bottom surface 44 and being open towards the front face 8. The tub 50 may fittingly receive the at least two locking features 10, so that the at least two locking features 10 may be arranged between an inner circumferential wall of the tub 50 and the contact pillar 48. The locking features of the plug contact may be inserted between the contact pillar 48 and the at least two locking features 10.

Preferably, the socket insert 24 may be formed as an injection molded piece, particularly as a multi component mold. The sealing rings 40 may be formed integrally with the tub 50 during the injection molding process.

Multiple socket inserts 24 may be combined into a unitary part 51. The unitary part 51 may hold each socket insert 24 at a predetermined relative position to one another to match an arrangement of sockets 6 formed in the housing 4. Therefore, multiple socket inserts 24 can be mounted in the housing 4 simultaneously, allowing an easy pre-alignment of the socket insert 24 in the distribution automation device 1 and a reduction of assembly time. The unitary part 51 may be a monolithic part 53, e.g. via injection molding. Hence, the pitch between the socket inserts 24 may be fixed during the production process of the monolithic part 53.

The unitary part 51 may comprise sections of reduced material thickness in comparison to its immediate surroundings for forming a predetermined breaking area for separating one socket insert 24 from the unitary part 51.

The unitary part 51 may be formed as a longitudinal strip, wherein at either lateral side at least one socket insert 24 may be attached protruding laterally from the longitudinal strip. Therefore, two rows of socket inserts 24 may be provided, wherein the longitudinal strip is adapted to be arranged between two sockets 6 in the housing 4.

On the right hand side of Fig. 2, the second type of plug connector 52 is shown. The second type of the plug connector 52 may be a push-pull connector, particularly an inner push-pull connector having at least one elastically deflectable latch 54 as complementary formed locking features 37. The latch 54 may have a spring body 56 extending axially with a radial latching protrusion 58 at a free end of the latch 54. The latch 54 may be inserted in the notch 18 providing space for deflecting the latch 54, particularly the radial latching protrusion 58, radially inwards. After passing the protrusion 28, the latch 54 regains its initial position so that the radial latching protrusion 58 may abut the second locking feature 14 in a positive fit. The radial latching protrusion 58 may abut a stop surface 60 of the second locking feature 14, preventing a removal of the plug connector 52 of the second type from the socket 6.

For removing the second type of plug connector 52 from the socket 6, the second type of plug connector 52 may be actuated, for example, by pressing or pushing a part of the connector, causing the latch 54 to be deflected radially inwards and disengaging the second locking feature 14.

Contrary to the first type of plug connector 41, the second type of plug connector 52 does not abut the sealing ring 40 formed on the bottom of the socket insert 24. Instead, the second type of plug connector 52 comprises a sealing ring 62 adapted to be received in the depression 30 for sealing the connection between the second type of plug connector 52 and the socket 6.

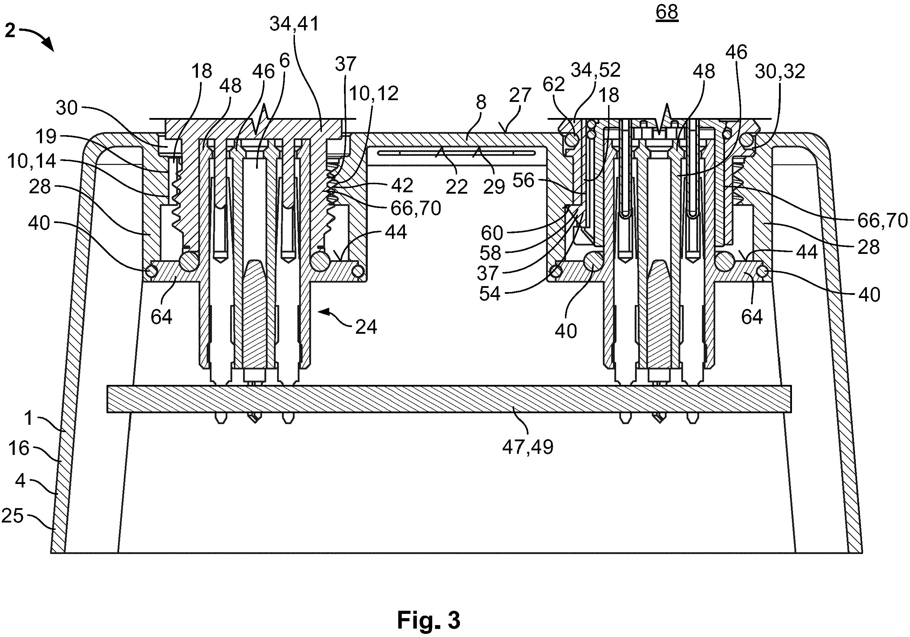

In Fig. 3, a second exemplary embodiment of the inventive distribution automation device 1 and connector arrangement 2 is shown.

Contrary to a first embodiment, the socket insert 24 does not fittingly receive the at least two locking features 10. The socket insert 24 comprises a radially protruding essentially disc-shaped collar 64 having a sealing ring 40 on a surface facing the socket 6 adapted to sealingly engage at least one of the at least two locking features 10. Furthermore, the socket insert 24 comprises a second sealing ring 40 extending around the outer circumference of the collar 64.

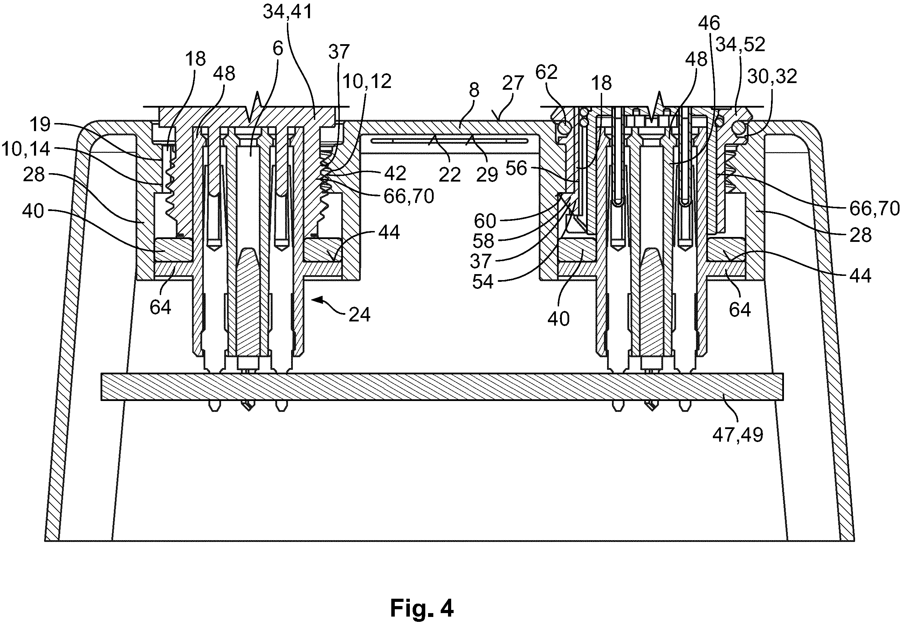

The protrusion 28 of the distribution automation device 1 may extend further into the volume 26 than the at least two locking features 10 forming a receptacle for fittingly receiving the collar 64 of the socket insert 24. Thus, the second sealing ring 40 is pressed between the collar 64 of the socket insert 24 and the protrusion 28 sealing the connection between the socket insert 24 and the distribution automation device 1. Alternatively, a single sealing ring 40 may be provided covering the surface of the collar 64 facing the socket 6 (see Fig.4). The single sealing ring 40 may be adapted to seal both the connection between the at least one socket insert 24 and the housing 4 and the connection between the at least one socket insert 24 and at least one type of the plug connector (10)

As the socket insert 24 is not put over the protrusion 28, it is possible to position each socket 6 closer to an edge of the front face 8, particularly a side edge of the front face 8, increasing the distance between two adjacent sockets 6. Hence, the pitch between the plug connectors 34 may be prevented.

It should be noted that the embodiments shown in the figures relate to an exemplary advantageous embodiment of the inventive distribution automation device 1. However, according to the invention, the at least one socket (6) may also comprise just one type of locking feature (10) for engaging a complementary locking feature (37) of the at least one plug connector (10). The at least one plug connector (10) may preferably be an inner push-pull type plug connector and the locking feature (10) may be adapted to engage the locking latch of the plug connector.

### REFERENCE NUMERALS

- 1: distribution automation device
- 2: connector arrangement
- 4: housing
- 6: socket
- 8: front face
- 10: locking features
- 12: first type of locking feature
- 14: second type of locking feature
- 16: monolithic unit
- 17: part
- 18: notch
- 19: part
- 20: positioning rib
- 22: bottom surface
- 24: socket insert
- 25: die cast part
- 26: volume
- 27: side facing away from the volume
- 28: protrusion
- 29: side facing the volume
- 30: depression
- 32: abutment shoulder
- 34: plug connector
- 36: outer surface
- 37: complementary formed locking feature
- 38: step
- 40: sealing ring
- 41: first type of the plug connector
- 42: internal thread
- 44: bottom surface
- 46: connector interface
- 47: contact element
- 48: contact pillar
- 49: printed circuit board
- 50: tub
- 51: unitary part
- 52: second type of the plug connector
- 53: monolithic part
- 54: latch
- 56: spring body
- 58: latching protrusion
- 60: stop surface
- 62: sealing ring
- 64: collar
- 66: gap
- 68: outside
- 70: channel

## Claims

1. Distribution automation device (1) for receiving a plug connector (34), the distribution automation device (1) comprising a housing (4) with a socket (6) for at least partially receiving the plug connector (34), wherein the socket (6) comprises at least one locking feature (10) for engaging a complementary locking feature (37) of the plug connector (34), wherein the at least one locking feature (10) and the housing (4) are formed integrally with one another as a monolithic unit (16).

2. Distribution automation device (1) according to claim 1, wherein a socket insert (24) is mounted in the socket (6) and wherein a gap (66) is formed between the socket insert (24) and the housing (4), the at least one locking feature (10) being accessible through the gap (66).

3. Distribution automation device (1) according to claim 2, wherein the gap (66) is open at a side of the socket (6) facing the outside (68) and forms a channel (70) leading to the at least one locking feature (10).

4. Distribution automation device (1) according to claim 2 or 3, wherein the socket insert (24) does not protrude from the housing (4) at the side of the socket (6) facing the outside (68).

5. Distribution automation device (1) according to any one of claims 2 to 4, wherein a plurality of sockets (6) and a plurality of socket inserts (24) are provided and wherein the plurality of socket inserts (24) are combined into a unitary part (51) that is configured to be unitarily mounted in the sockets (6).

6. Distribution automation device (1) according to claim 5, wherein the unitary part is formed as an injection molded part (53).

7. Distribution automation device (1) according to any one of claims 2 to 6, wherein at least one sealing ring (40) is provided to seal the connection between the socket insert (24) and at least one of the housing (4) and the plug connector (34), the at least one sealing ring (40) and the socket insert (24) being formed integrally with one another as a monolithic component.

8. Distribution automation device (1) according to any one of claims 1 to 7, wherein the at least one locking feature (10) is arranged coaxially with the socket (6).

9. Distribution automation device (1) according to any one of claims 1 to 8, wherein the at least one locking feature (10) extends only over a part (19) of an inner circumference of the socket (6).

10. Distribution automation device (1) according to any one of claims 1 to 9, wherein the housing (4) is a die cast part (25).

11. Distribution automation device (1) according to any one of claims 1 to 10, wherein at least one positioning rib (20) is formed on a bottom surface (22) of the housing (4) facing away from the outside for positioning the socket insert (24) relative to the socket (6).

12. Distribution automation device (1) according to any one of claims 1 to 11, wherein the socket (6) comprises at least two locking features (10) that are formed integrally with one another and the housing (4) as the monolithic unit (16), and wherein a first locking feature (12) of the at least two locking features and a second locking feature (14) of the at least two locking features employ different types of positive fit systems.

13. Distribution automation device (1) according to claim 12, wherein the at least two locking features (10) extend over different parts (19) of the inner circumference of the socket (6).

14. Distribution automation device (1) according to claim 12 or 13, wherein the second locking feature (14) of the at least two locking features (10) may be radially further distanced to a center axis of the socket (6) than the first locking feature (12) of the at least two locking features (10).

15. Kit comprising a first type and a second type of plug connectors (41, 52), the first type of the plug connector (41) and the second type (52) of the plug connector having different types of complementary formed locking features (37), and a distribution automation device (1) according to any one of claims 12 to 14, wherein the first locking feature (12) of the at least two locking features is adapted to engage the complementary locking feature (37) of the first type of the plug connector (41), employing a first type of a positive fit system and the second locking feature (14) of the at least two locking features is adapted to engage the complementary locking feature (37) of the second type of the plug connector (52), employing a second type of a positive fit system, the second type of the positive fit system being different from the first type of the positive fit system.
